# EUROPÄISCHE PATENTSCHRIFT

(11) **EP 0 733 142 B1**
(45) Veröffentlichungstag und Bekanntmachung des Hinweises auf die Patenterteilung: **22.04.1998**
(21) Anmeldenummer: 95903792.0
(22) Anmeldetag: 05.12.1994
(51) Int. Cl.: E04D 5/14, E04D 3/36, F16B 43/00

(54) **GROSSFLÄCHIGE UNTERLEGSCHEIBE**
LARGE-AREA WASHER
RONDELLE A GRANDE SURFACE

(30) Priorität: 10.12.1993 DE 4342261
(43) Veröffentlichungstag der Anmeldung: 25.09.1996
(73) Patentinhaber: SFS Industrie Holding AG, 9435 Heerbrugg (CH)
(72) Erfinder: ÖSTERLE, Helmut, A-6800 Feldkirch (AT); BAUMGARTNER, Stefan, CH-9450 Altstätten (CH)
(74) Vertreter: Ludescher, Hans
(86) Internationale Anmeldenummer: EP9404038
(87) Internationale Veröffentlichungsnummer: WO9516088

(56) Entgegenhaltungen:
- EP-A- 0 256 589
- EP-A- 0 427 120
- EP-A- 0 529 690
- CH-A- 608 080
- DE-A- 4 008 782
- US-A- 4 726 164
- US-A- 4 763 456

## Beschreibung

Die Erfindung betrifft eine großflächige Unterlegscheibe der im Oberbegriff des Patentanspruchs 1 angegebenen Art.

Eine solche Unterlegscheibe ist aus der US-A-47 63 456 und aus der US-A-47 87 188 bekannt.

Derartige Unterlegscheiben werden in der Regel bei der Befestigung ein- oder mehrschichtiger Dachbahnen und/oder einer Isolierschicht auf einem festen Unterbau eingesetzt. Um eine entsprechende Halterung der abdeckenden Dachbahn zu erzielen, sind bei der aus der US-A-47 63 456 bekannten großflächigen Unterlegscheibe an der Unterseite in Befestigungsrichtung weisende Spitzen und bei der aus der US-A-47 87 188 bekannten großflächigen Unterlegscheibe an der Unterseite in Befestigungsrichtung weisende Zacken als vorstehende Elemente vorgesehen, welche die Dachbahn durchbohren, also Eingriffselemente sind, die in die Dachbahn eingreifen bzw. die Dachbahn nicht durchbohren, also lediglich die Reibung zwischen der Dachbahn und der Unterlegscheibe erhöhen. Durch entsprechende Sogbelastung auf die Dachbahn entstehen relativ hohe Kräfte, so daß das Bestreben besteht, die Dachbahn unter dem Befestiger oder unter der Unterlegscheibe herauszuziehen. Die an der Unterseite der Unterlegscheiben vorstehenden Elemente, die den Eingriff verbessern bzw. die Reibung erhöhen, sollen dabei eine entsprechende Sicherheit der Befestigungsstelle gewährleisten.

Auf der anderen Seite ist die Notwendigkeit gegeben, die Verschraubung auf einem geneigten Dach oder einem Flachdach maschinell vornehmen zu können, wobei in irgendeiner Form eine Magazinierung sowohl der Schrauben als auch der Unterlegscheiben erforderlich ist. Da die wirkungsvollste Art der Magazinierung der Unterlegscheiben auch vom benötigten Platzbedarf her gesehen die Übereinanderstapelung darstellt, ergeben sich Probleme mit den von den Unterlegscheiben vorstehenden Elementen. Für eine Vereinzelung der Unterlegscheiben in einem entsprechenden Einschraubgerät ist es notwendig, daß die übereinanderliegenden Unterlegscheiben oder zumindest die jeweils zuunterst liegende Unterlegscheibe gegenüber dem darüberliegenden Stapel verschoben oder verdreht werden kann. Die vorstehenden Elemente, die zur Erhöhung der Reibung oder des Eingriffs vorgesehen sind, sind dabei hindernd im Wege.

Das gleiche Problem besteht auch bei einer bekannten Unterlegscheibe (DE-AS 12 69 840), bei der als Abstandhalter wirkende Einpressungen mit Zungen vorgesehen sind, welche bei übereinanderliegenden Unterlegscheiben eine Vereinzelung ebenfalls behindern können.

Die Erfindung hat sich daher zur Aufgabe gestellt, eine großflächige Unterlegscheibe der eingangs genannten Art so auszubilden, daß sie trotz des Vorhandenseins von vorstehenden Elementen zum Erhöhen der Reibung oder des Eingriffs in einfacher Weise aus einer gestapelten Anordnung vereinzelt, also gegenüber einer oder mehreren darüberliegenden weiteren Unterlegscheiben verschoben oder verdreht werden kann.

Erfindungsgemäß wird diese Aufgabe durch die im Patentanspruch 1 angegebenen Merkmale gelöst.

Durch die vorliegende Erfindung werden bei einer großflächigen Unterlegscheibe also zusätzliche Abstandhalter vorgesehen, welche gewährleisten, daß die vorstehenden Elemente, welche zum Erhöhen der Reibung oder des Eingriffs vorgesehen sind, keinen störenden Einfluß auf die Oberseite der darunterliegenden Unterlegscheibe ausüben, was vor allem bei großflächigen Unterlegscheiben von besonderem Vorteil ist, bei denen die vorstehenden Elemente, die zur Erhöhung der Reibung vorgesehen sind, aus einer Beschichtung bestehen. Es besteht daher die Möglichkeit, übereinanderliegende Unterlegscheiben gegeneinander um deren Mittelachse zu verdrehen oder gegebenenfalls in Längsrichtung gegeneinander zu verschieben, ohne daß deren vorstehende Elemente, die zum Erhöhen der Reibung oder des Eingriffs vorgesehen sind, auf die jeweils darunterliegende Unterlegscheibe störend einwirken können. Gerade dann, wenn die Unterlegscheiben verzinkt ausgeführt oder mit einer anderen Oberflächenbehandlung versehen wurden, ist dies von besonderer Bedeutung.

Die erfindungsgemäßen Maßnahmen betreffen also eine spezielle Ausgestaltung an einer Unterlegscheibe, die eine optimale Stapelung mehrerer Unterlegscheiben in einer entsprechenden Verarbeitungsvorrichtung ermöglichen, so daß dann in dieser Verarbeitungsvorrichtung auch eine sehr einfache und störungsfreie Vereinzelung stattfinden kann.

Die erfindungsgemäßen Maßnahmen können durch relativ einfache technische Mittel bewerkstelligt werden. Eine Ausführungsvariante sieht vor, daß die Abstandhalter als aus der Unterlegscheibe ausgestanzte und nach unten oder nach oben gebogene Laschen ausgeführt sind. Dies ist eine sehr einfache Lösung, mit der eine optimale gegenseitige Abstützung der übereinander gestapelten Unterlegscheiben möglich ist. In diesem Zusammenhang ist es wirkungsvoll, wenn die abgebogenen Laschen und die dadurch gebildeten Löcher jeweils eine Rechteckform aufweisen. Dadurch ergibt sich am frei auskragenden Endbereich der Lasche eine relativ lange Abstützkante, so daß auch ein Kippen der Unterlegscheibe in einem Stapel bestmöglich verhindert ist.

Eine weitere Ausgestaltung sieht vor, daß zur Bildung von Abstandhaltern an zwei einander gegenüberliegenden Rändern eines rechteckigen Loches Laschen nach unten oder nach oben gebogen sind. Dabei wäre es auch denkbar, daß die Lasche am einen Rand nach oben und am gegenüberliegenden Rand nach unten abgebogen wird. Durch jeweils zwei mit geringem Abstand voneinander angeordnete Abstandhalter, welche natürlich mehrfach, zumindest aber in zweifacher Ausführung vorhanden sind, ergibt sich eine relativ stabile Abstützung mit großer Kippsicherheit.

Gerade dann, wenn eine Unterlegscheibe mit einer mittigen Öffnung zur Durchführung eines Befestigers eingesetzt wird, ist es zweckmäßig, daß beidseitig der Öffnung in der Unterlegscheibe zur Aufnahme eines Befestigers jeweils wenigstens je ein Abstandhalter ausgebildet oder angeordnet ist. Somit ist vom Zentrum der Unterlegscheibe aus nach zwei Richtungen hin eine entsprechende Abstützung zum gegenseitigen Abstandhalten vorgesehen.

Gemäß einer besonderen Ausführungsmöglichkeit liegen dabei die Öffnung und die wenigstens zwei Abstandhalter auf der gemeinsamen Längsmittelachse der Unterlegscheibe. Diese Lösung erscheint aus fertigungstechnischen Gründen am einfachsten. Um jedoch eine entsprechende Abstimmung auf an der Unterlegscheibe vorhandene Versteifungselemente wie Sicken oder dergleichen zu berücksichtigen, sind gegebenenfalls zusätzliche Ausführungsvarianten zweckmäßig, um einen entsprechend großen Verschwenk- oder Verschiebebereich zweier übereinander gestapelter Unterlegscheiben zu ermöglichen. Eine solche Variante sieht vor, daß eine durch die Öffnung und die wenigstens zwei Abstandhalter gelegte Achse gegenüber der Längsmittelachse der Unterlegscheibe um bis zu einem spitzen Winkel von etwa 10°, vorzugsweise um annähernd 5°, verdreht ist. Es ist dann beispielsweise ein wesentlich größerer Verschwenkwinkel der übereinander zu stapelnden Unterlegscheiben möglich, ohne daß die Abstandhalter mit eventuell vorhandenen Versteifungselementen in Eingriff kommen.

Eine weitere Lösungsmöglichkeit sieht dabei vor, daß der Abstand der beiden Abstandhalter zu beiden Seiten der Öffnung hin verschieden groß ist. Diese Ausführungsvariante kann bei speziellen Erfordernissen für die Vereinzelung von Unterlegscheiben von Vorteil sein.

Eine aus Fertigungsgründen vorteilhafte Ausgestaltung liegt darin, daß die als Laschen ausgebildeten Abstandhalter im rechten Winkel zur Ebene der Unterlegscheibe ausgerichtet sind. Überall dort, wo eine solche Ausgestaltung anwendbar ist, erscheint dies die zweckmäßigste Herstellungsform. Gerade dann aber, wenn darauf zu achten ist, daß bei den übereinander zu stapelnden Unterlegscheiben die jeweiligen Abstandhalter nicht in entsprechende Löcher der nächstfolgenden Unterlegscheibe eingreifen können, sind zusätzliche Maßnahmen erforderlich. Wenn die Abstandhalter nämlich in ein entsprechendes Loch an der nächstfolgenden Unterlegscheibe eingreifen können, dann ist die Wirkung als Abstandhalter verloren, da dann ja wieder die vorstehenden Elemente mit der Oberseite der folgenden Unterlegscheibe im Eingriff stehen. In diesem Fall wird vorgeschlagen, wenn die als Lasche ausgebildeten Abstandhalter spitzwinklig gegenüber der Ebene der Unterlegscheiben geneigt sind. In diesem Zusammenhang ist es wohl am vorteilhaftesten, daß die als Lasche ausgebildeten Abstandhalter spitzwinklig gegenüber der Ebene der Unterlegscheiben in die dem in der Unterlegscheibe gebildeten Loch abgewandte Richtung geneigt sind. Es ist dann stets gewährleistet, daß die Laschen auf einem vollen Materialabschnitt der folgenden Unterlegscheibe abgestützt sind und keinesfalls in das beim Abbiegen der Lasche gebildete Loch eingreifen können.

Eine weitere Ausführungsvariante sieht vor, daß die Abstandhalter von am Außenrand der Unterlegscheibe abgebogenen Abschnitten gebildet sind. Es können also am Randbereich der Unterlegscheibe entsprechend kurze oder längere Abschnitte abgebogen werden, welche dafür sorgen, daß die Unterlegscheiben eben über diese Abschnitte als Abstandhalter gegenseitig abgestützt sind und damit verhindern, daß sich die vorstehenden Elemente auf der Oberseite der nächstfolgenden Unterlegscheibe abstützen.

Wenn die Abstandhalter von an den Außenecken abgebogenen Abschnitten oder Laschen gebildet sind, kann dadurch eine wesentliche Materialeinsparung erzielt werden, da bei solchen Laschen Material eingesetzt wird, welches sonst üblicherweise bei der Herstellung der Unterlegscheibe in dem abgebogenen Eckbereich abgetrennt würde. Bei einer solchen Ausführung ist es in gleicher Weise wie bei der Ausbildung an den Seitenrändern möglich, daß die am Außenrand der Unterlegscheibe ausgebildeten Abstandhalter spitzwinklig gegen den Innenbereich der Unterlegscheibe gebogen sind. Dabei können diese Abstandhalter bezogen auf die Ebene der Unterlegscheibe sowohl nach oben als auch nach unten abgebogen werden.

Eine weitere konstruktive Ausgestaltung in diesem Zusammenhang sieht vor, daß die am Außenrand der Unterlegscheibe ausgebildeten Abstandhalter zur Gänze umgebogen sind, so daß deren auf der Unterseite oder auf der Oberseite der Unterlegscheibe aufliegende Dicke die Höhe des Abstandhalters bildet. Dies ist sicherlich dann zweckmäßig, wenn die Höhe der vorstehenden Elemente relativ gering ist. Es muß ja lediglich gewährleistet sein, daß die vorstehenden Elemente bei einer Übereinanderstapelung der Unterlegscheiben nicht auf der jeweils darunterliegenden Unterlegscheibe aufsitzen und die Oberfläche beschädigen oder ein ordnungsgemäßes Vereinzeln in einer Verarbeitungsmaschine verhindern.

Eine weitere Ausführungsvariante sieht vor, daß die Abstandhalter von in Öffnungen an der Unterlegscheibe eingesetzten, z.B. durch Preßsitz oder federnde Rastelemente gehaltenen, getrennt gefertigten Teilen gebildet sind. Es können also bei der Herstellung der Unterlegscheibe in einem Stanzvorgang aus dem Metallteil vorerst entsprechende Öffnungen gestanzt werden, in welche dann bei Bedarf getrennt gefertigte Abstandhalter eingedrückt und festgelegt werden können. Eine solche Ausführung ist sicherlich auch dann sinnvoll, wenn die Unterlegscheiben sowohl ohne Abstandhalter als auch mit Abstandhalter eingesetzt werden sollen. Es wird dann natürlich für die einfache Anwendungsart genügen, lediglich eine entsprechende Öffnung vorzusehen, in die dann bei Bedarf Rastelemente eingesetzt werden können.

Ausführungsbeispiele der Erfindung werden in der nachstehenden Beschreibung anhand der Zeichnungen näher erläutert. Es zeigen:
- Fig. 1: einen Schnitt durch ein Einsatzbeispiel einer großflächigen Unterlegscheibe bei der Befestigung von Isolationsschichten und Dachbahnen;
- Fig. 2: den gleichen Einsatzfall wie in Fig. 1, wobei jedoch entsprechende Kräfte auf die Dachbahn einwirken;
- Fig. 3: eine Draufsicht auf eine großflächige Unterlegscheibe;
- Fig. 4: einen Schnitt nach der Linie IV-IV in Fig. 3;
- Fig. 5: einen Schnitt nach der Linie V-V in Fig. 3;
- Fig. 6: eine Draufsicht auf eine Unterlegscheibe gemäß Fig. 3, wobei jedoch gegenüber der Ausführung in Fig. 3 konstruktive Änderungen vorhanden sind;
- Fig. 7: einen Stapel übereinander geschichteter Unterlegscheiben gemäß der Ausführung nach den Fig. 3 oder 6, wobei die Funktion der Abstandhalter ersichtlich ist;
- Fig. 8: eine Draufsicht auf eine andere Ausführung einer Unterlegscheibe;
- Fig. 9: einen Schnitt nach der Linie IX-IX in Fig. 8;
- Fig. 10: einen gleichen Schnitt wie in Fig. 9, wobei jedoch die Stellung der Abstandhalter verändert ist;
- Fig. 11: eine Draufsicht auf eine andere Ausführungsform einer Unterlegscheibe;
- Fig. 12: eine Seitenansicht dieser Unterlegscheibe;
- Fig. 13: eine Draufsicht auf eine andere Ausführungsform der Unterlegscheibe;
- Fig. 14: einen Schnitt durch diese Unterlegscheibe nach der Linie XIV-XIV in Fig. 13.

Eine großflächige Unterlegscheibe 1 wird zur Befestigung einer Isolationsschicht 2 und einer diese abdeckenden Dachbahn 3 an einem festen Unterbau 4 eingesetzt. In eine mittige Öffnung 5 wird ein Befestiger 6 eingeführt, der in diesem Falle als Schraube ausgebildet ist. Die Befestigung der Dachbahn 3 erfolgt jeweils an einem Randbereich 7, wobei der Randbereich 8 einer darauffolgenden Dachbahn 3' die Verschraubungsstellen überdeckt. Die Dachbahnen 3 und 3' werden dann im Bereich 9 miteinander verklebt oder verschweißt. Die Befestigung selbst ist dadurch in einen Bereich gelangt, welcher gegenüber außen hin abgedichtet ist.

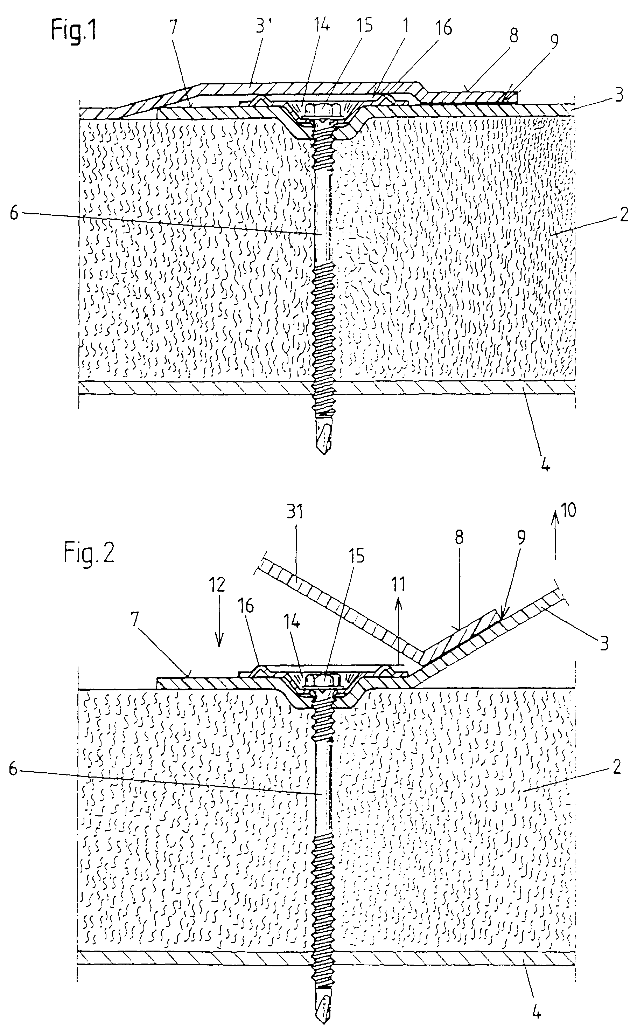

Wenn nun, wie dies der Fig. 2 entnommen werden kann, die Dachbahnen 3, 3' durch entsprechende, in Pfeilrichtung 10 wirkende Sogkräfte nach oben gezogen werden, dann wirken entsprechende Kräfte auf die Verschraubung und insbesondere auch auf die Unterlegscheibe 1 ein. Der im Bild rechte Bereich der Unterlegscheibe 1 wird in Pfeilrichtung 11 nach oben gezogen, wogegen der im Zeichnungsblatt linke Bereich der Unterlegscheibe 1 in Pfeilrichtung 12 nach unten gedrückt wird. Es soll nun dieser Randbereich der Dachbahn 3 bei einem solchen extremen Kräfteanfall sicher unter der Unterlegscheibe 1 gehalten werden. Zu diesem Zweck bedarf es einer besonderen Anordnung und Ausbildung von an der Unterseite der Unterlegscheibe 1 vorstehenden Elementen 13, welche auf verschiedenste Art und Weise hergestellt oder angeordnet werden können. Anstelle der hier als vorstehende Eingriffselemente ausgebildeten Elemente 13 kann auch eine entsprechende Beschichtung mit gegebenenfalls grob- oder feinkörnigen Einschlüssen vorgesehen werden, um dadurch die Reibung der Unterseite der Unterlegscheibe gegenüber der Dachbahn zu erhöhen. Mit entsprechenden Eingriffselementen wird neben der Erhöhung der Reibung auch noch der Eingriff verbessert, so daß zwischen der Unterlegscheibe und der Dachbahn entsprechend größere Kräfte übertragen werden können.

An sich ergibt sich bei solchen Unterlegscheiben dann das Problem, daß die in einem Stapel bereitliegenden Unterlegscheiben durch entsprechende Anordnung von Eingriffselementen 13 oder eine entsprechende Beschichtung in einer Verarbeitungseinrichtung, also beispielsweise in einem Schrauber, nur sehr schlecht oder mit Störungen behaftet verarbeitet werden können. Aus einem entsprechenden Stapel von Unterlegscheiben muß ja stets die unterste Unterlegscheibe vereinzelt werden können, ohne daß dabei der darüber angeordnete Stapel hindernd im Wege ist oder gegebenenfalls die Zufuhr der untersten Unterlegscheibe in die Stellung unterhalb der Schraubachse behindert wird.

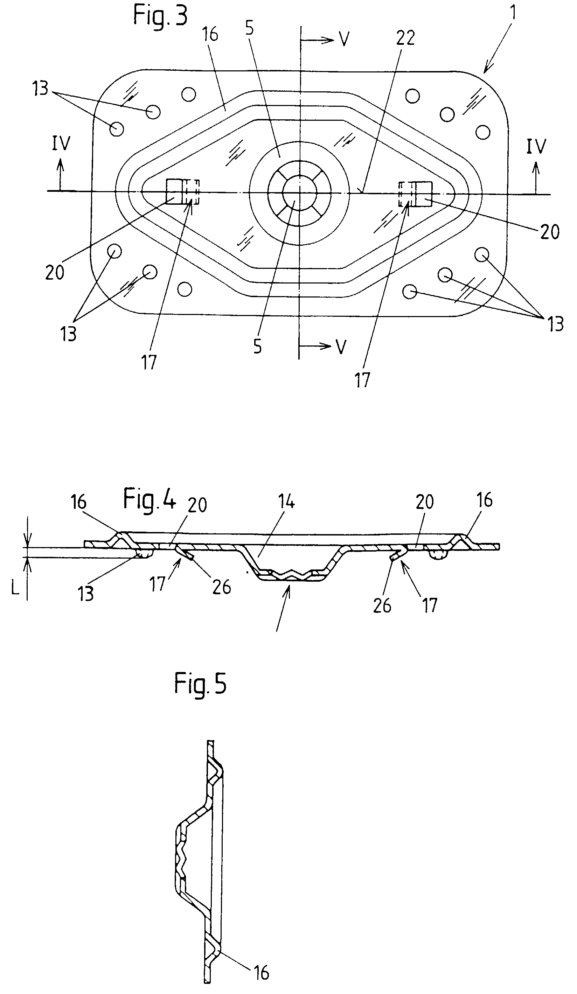

Bei der Unterlegscheibe nach den Fig. 3 bis 5 wird u.a. vorgesehen, daß die Öffnung 5 für die Aufnahme des Befestigers 6 in einer Vertiefung 14 angeordnet ist, welche dafür sorgt, daß der Kopf 15 der Schraube versenkt aufgenommen wird. Zur Versteifung der Unterlegscheibe 1 ist beim gezeigten Ausführungsbeispiel ein umlaufendes Versteifungselement 16 in Form einer nach oben gerichteten Sicke vorgesehen. Das Versteifungselement 16 kann natürlich auf verschiedenste Art und Weise gestaltet werden, wobei es nicht im Sinne der vorliegenden Erfindung notwendig ist, daß hier eine umfangsgeschlossen durchgehende Sicke vorhanden ist.

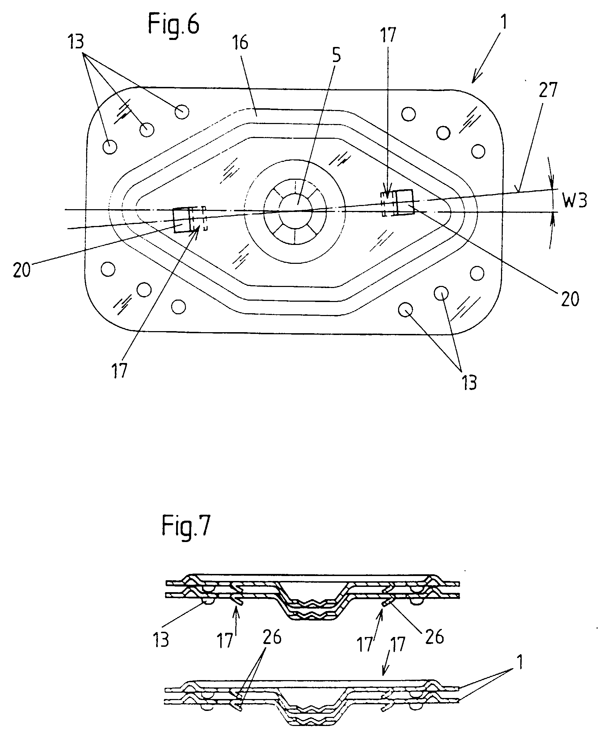

Um nun einen bei der Stapelung mehrerer Unterlegscheiben 1 wirksamen Abstandhalter 17 zu schaffen, sind beim gezeigten Beispiel nach den Fig. 3 bis 5, aber auch bei der Ausführung nach Fig. 6, aus der Unterlegscheibe 1 ausgestanzte und nach unten gebogene Laschen 26 vorhanden. Diese Laschen hinterlassen ein Loch 20 mit einer Rechteckform, wobei die Laschen 26 selbst ebenfalls eine Rechteckform aufweisen und dadurch an deren freiem Ende eine linienförmige Auflage als Abstandhalter 17 gewährleisten. Die Höhe H der Laschen 26 von deren Fuß aus bis zur höchsten Erhebung von der Unterlegscheibe 1 weg ist gleich groß wie oder größer als die Höhe L der an der Unterseite der Unterlegscheibe 1 vorstehenden Elemente 13. Bei der gezeigten Ausführungsform sind die Laschen 26 nach unten hin, also in Befestigungsrichtung, abgebogen. Es wäre aber auch denkbar, nach oben hin abgebogene Laschen 26 als Abstandhalter 17 vorzusehen, wobei dann jedoch unter Umständen längere oder in anderer Anordnung vorgesehene Laschen einzusetzen sind, je nach Anordnung der Versteifungselemente 16 in Form der üblichen Sicken.

In diesem Zusammenhang wäre es aber auch denkbar, daß zur Bildung von Abstandhaltern 17 an zwei einander gegenüberliegenden Rändern eines rechteckigen Loches 20 nach unten oder nach oben gebogene Laschen 26 vorgesehen werden.

Wie gerade bei den Ausführungen nach den Fig. 3 bis 6 ersichtlich ist, wird zweckmäßigerweise beidseitig der Öffnung 5 in der Unterlegscheibe 1 zur Aufnahme des Befestigers jeweils wenigstens je ein Abstandhalter 17 ausgebildet oder angeordnet. Es ist dann trotz der Anordnung von nur zwei Abstandhaltern 17 eine große Kippsicherheit gegeben, wenn entsprechend viele Unterlegscheiben übereinander gestapelt sind. Außerdem ist trotzdem die Gewähr gegeben, daß die Unterlegscheiben gegenseitig vereinzelt, d.h., gegeneinander verdreht oder aber in Längs- oder Querrichtung um ein entsprechendes Maß gegeneinander verschoben werden können.

Bei der Ausführung nach Fig. 3 ist ersichtlich, daß die Öffnung 5 und die wenigstens zwei Abstandhalter 17 auf der gemeinsamen Längsmittelachse 22 der Unterlegscheibe 1 liegen. Damit gerade bei einer besonderen Anordnung der Versteifungselemente 16, wie sie in Fig. 6 dargestellt sind, ein weiteres gegenseitiges Verdrehen der übereinander gestapelten Unterlegscheiben möglich wird, ist gerade bei der Ausführung nach Fig. 6 vorgesehen, daß eine durch die Öffnung 5 und die wenigstens zwei Abstandhalter 17 gelegte Achse 27 gegenüber der Längsmittelachse 22 der Unterlegscheibe 1 um bis zu einem spitzen Winkel W3 von etwa 10°, vorzugsweise um annähernd 5°, verdreht ist. Damit kann nach einer Richtung hin, also je nach Ausbildung der Vereinzelungsvorrichtung, ein größerer Verschwenkbereich erreicht werden.

In diesem Zusammenhang wäre es gerade in Anpassung an verschiedene Konstruktionsvarianten einer Unterlegscheibe auch möglich, den Abstand der beiden Abstandhalter 17 zu beiden Seiten der Öffnung 5 hin verschieden groß auszuführen.

Bei der gezeigten Ausführung in den Fig. 3 bis 6 sind die als Laschen 26 ausgebildeten Abstandhalter 17 spitzwinklig gegenüber der Ebene der Unterlegscheibe 1 geneigt ausgeführt. Es ist sowohl eine Neigung nach der einen oder nach der anderen Seite hin möglich, doch erscheint es gerade im Hinblick auf ein mögliches Eintauchen des freien Endes der Laschen 26 in das Loch 20 der darunterliegenden Unterlegscheibe vorteilhaft, wenn die Lasche eben in die dem in der Unterlegscheibe gebildeten Loch 20 abgewandte Richtung geneigt ist. Damit ist gewährleistet, daß die Laschen 26 nicht oder zumindest nicht gemeinsam in die zugeordneten Löcher 20 eingreifen können. Dazu hilft auch bei, daß die beiden Laschen 26 beidseitig der Öffnung 5 in Richtung gegeneinander geneigt sind.

Bei verschiedenen Ausführungsvarianten wäre es auch durchaus möglich, daß die als Laschen 26 ausgebildeten Abstandhalter 17 im rechten Winkel zur Ebene der Unterlegscheibe ausgerichtet werden.

Aus Fig. 7 ist ein entsprechender Stapel solcher Unterlegscheiben ersichtlich, wobei nur die obersten und die untersten vier Unterlegscheiben eines solchen höheren Stapels dargestellt sind. Es ist daraus ersichtlich, daß trotz der Anordnung von entsprechenden Eingriffselementen 13 und auch von Versteifungselementen 16 kaum eine wesentliche Erhöhung des Stapels stattfindet, denn die erfindungsgemäß vorgesehenen Abstandhalter 17 sorgen ja lediglich dafür, daß die Eingriffselemente 13 mit ihren freien Enden nicht mit der Oberseite der darunterliegenden Unterlegscheibe in Eingriff kommen.

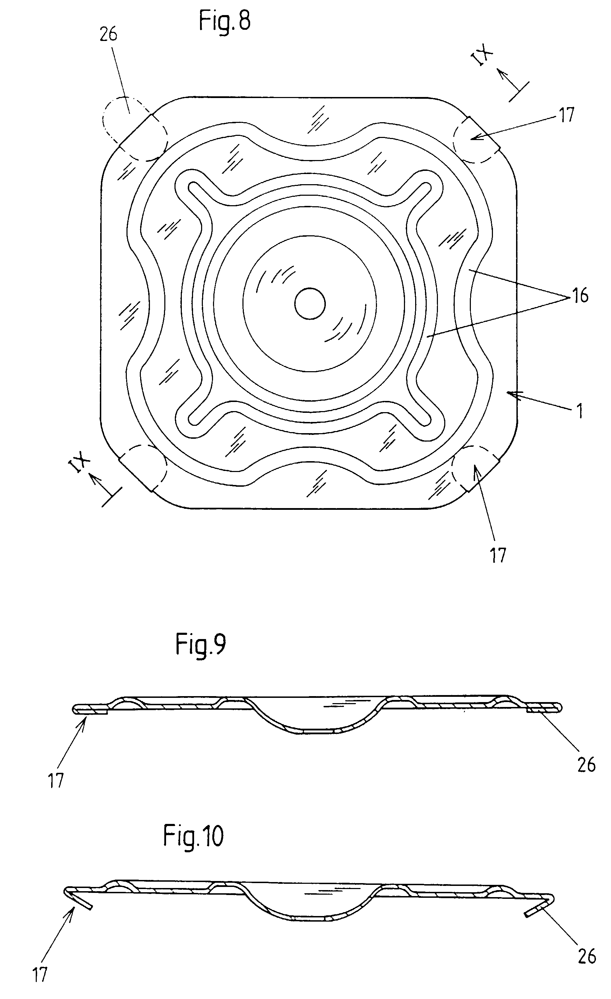

Bei der Ausführung nach den Fig. 8 bis 10 sind am Außenrand der Unterlegscheibe 1, und zwar in den Eckbereichen, Abstandhalter 17 in Form von Laschen 26 vorgesehen, welche spitzwinklig gegen den Innenbereich der Unterlegscheibe 1 gebogen sind, d.h. es sind hier also Abstandhalter 17 vorhanden, welche von an den Außenecken abgebogenen Abschnitten oder Laschen 26 gebildet sind. Wie aus Fig. 8 links oben ersichtlich, kann hier eine besondere Materialeinsparung stattfinden. Die Lasche 26 ragt beim Stanzvorgang vorerst noch nach außen hin und liegt dabei innerhalb des die Stanzform umhüllenden Quadrates, so daß für die Laschen 26 lediglich ansonsten vorhandenes Abfallmaterial eingesetzt wird.

Die am Außenrand der Unterlegscheibe ausgebildeten Abstandhalter 17 können dabei, wie dies der Fig. 9 entnommen werden kann, zur Gänze umgebogen sein, so daß deren auf der Unterseite der Unterlegscheibe 1 aufliegende Dicke auch die Höhe des Abstandhalters 17 bildet. Die Lasche 26 kann natürlich auch nach oben hin umgebogen werden, so daß sie dann auf der Oberseite der Unterlegscheibe 1 aufliegt. Der Fig. 10 kann diejenige Ausführungsvariante entnommen werden, wonach die als Laschen 26 ausgebildeten Abstandhalter 17 lediglich spitzwinklig gegen den Innenbereich der Unterlegscheibe gebogen sind.

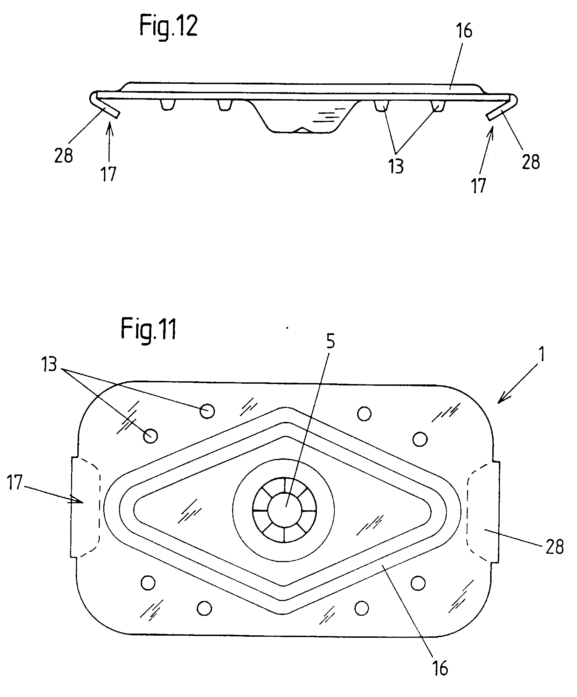

Bei der Ausführung nach den Fig. 11 und 12 geht es darum, die Abstandhalter 17 von am Außenrand der Unterlegscheibe 1 abgebogenen Abschnitten 28 zu bilden. Es können also an den Schmalseiten und/oder den Längsseiten der Unterlegscheibe entsprechend lange oder auch mehrere kurze Abschnitte 28 vorgesehen werden, die einfach spitzwinklig nach innen gegen den Innenbereich der Unterlegscheibe gebogen werden. Auch mit einer solchen Variante ist eine entsprechende Abstützung der in einem Stapel übereinanderfolgenden Unterlegscheiben gewährleistet.

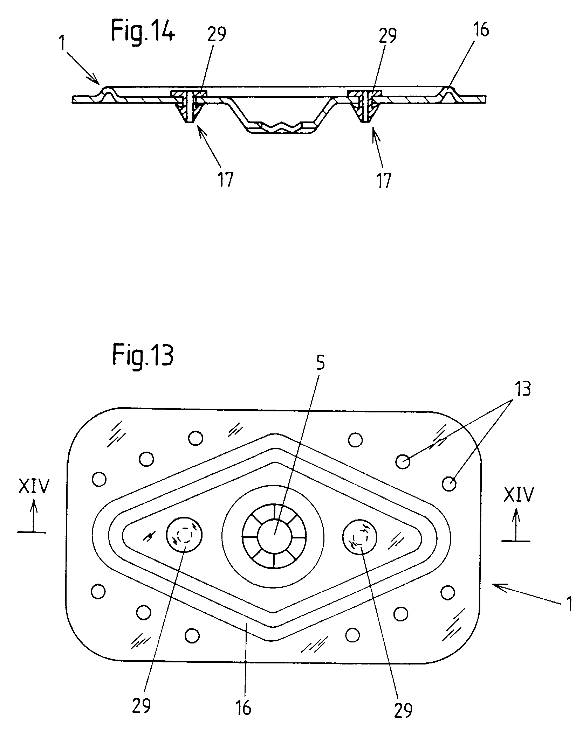

Bei der Ausführung nach den Fig. 13 und 14 geht es darum, daß die Abstandhalter 17 aus getrennt gefertigten Teilen 29 gebildet sind. Es werden hier lediglich an der Unterlegscheibe 1 Öffnungen vorbereitet, welche beim Stanzvorgang hergestellt werden, wobei dann die getrennt gefertigten Teile 29 z.B. durch Preßsitz oder federnde Rastelemente in diesen Öffnungen gehalten werden. Eine solche Ausführung ist dann zweckmäßig, wenn die Unterlegscheiben beispielsweise nur sporadisch zur Verarbeitung in Verarbeitungsmaschinen eingesetzt werden und ansonsten eine Vereinzelung gar nicht notwendig ist. Die getrennt gefertigten Teile können aus verschiedensten Materialien hergestellt werden, z.B. aus dem Tellermaterial selbst oder aber auch aus Kunststoff oder ähnlichen Werkstoffen.

Die Form der Abstandhalter kann auf verschiedenste Art und Weise variieren, wobei diese jedoch immer an der Oberseite und/oder der Unterseite der Unterlegscheibe vorstehen müssen und bei der Stapelung mehrerer Unterlegscheiben wirksam sind. Die Abstandhalter können in Form von Laschen, Stegen, Erhebungen, Noppen, Stiften oder dergleichen ausgebildet werden, wobei die konstruktive Gestaltung der Abstandhalter von den jeweiligen Erfordernissen bei den Verarbeitungsgeräten abhängen wird. Bei den gezeigten Ausführungsformen ist jeweils davon ausgegangen worden, daß entweder jeweils beidseitig der mittigen Öffnung 5 Abstandhalter 17 vorhanden sind, oder aber daß solche Abstandhalter am Randbereich oder an den Außenecken der Unterlegscheibe vorgesehen sind. Es ist auch möglich, gerade im Bereich der Versteifungselemente entsprechende Maßnahmen vorzusehen, um hier Abstandhalter zu bewirken. Es wäre daher auch denkbar, gerade im Bereich einer Sicke entsprechende Laschen vorzusehen oder aber im Innern der Sicke entsprechende Teile einzusetzen, die verhindern, daß die aufeinander zu stapelnden Unterlegscheiben gerade im Bereich der Versteifungselemente zu weit ineinander eingreifen können.

Es ist also stets immer eine entsprechende Möglichkeit vorzusehen, um eine bei der Stapelung mehrerer Unterlegscheiben wirksame Abstandhalterung vorzusehen.

## Patentansprüche

1. Großflächige Unterlegscheibe mit einer Öffnung (5) zum Einsetzen eines Befestigers (6), welche an der in Befestigungsrichtung weisenden Oberfläche vorstehende, die Reibung gegenüber einer und/oder den Eingriff in eine zu befestigende(n) Platte und/oder Bahn (3) erhöhende Elemente (13) aufweist, dadurch gekennzeichnet, daß an der Oberseite und/ oder der Unterseite der Unterlegscheibe (1) vorstehende, bei der Stapelung mehrerer Unterlegscheiben (1) wirksame Abstandhalter (17) in Form von Laschen (26), Stegen, Erhebungen, Noppen, Stiften oder dergleichen vorgesehen sind, und daß die Höhe (H) der Abstandhalter (17) von deren Fuß aus bis zur höchsten Erhebung von der Unterlegscheibe (1) weg wenigstens gleich der Höhe (L) der an der Unterseite der Unterlegscheibe (1) vorstehenden Elemente (13) ist.

2. Unterlegscheibe nach Anspruch 1, dadurch gekennzeichnet, daß die Abstandhalter (17) als aus der Unterlegscheibe (1) ausgestanzte und nach unten oder nach oben gebogene Laschen (26) ausgeführt sind.

3. Unterlegscheibe nach Anspruch 2, dadurch gekennzeichnet, daß die abgebogenen Laschen (26) und die dadurch gebildeten Löcher (20) jeweils eine Rechteckform aufweisen.

4. Unterlegscheibe nach Anspruch 3, dadurch gekennzeichnet, daß zur Bildung von Abstandhaltern (17) an zwei einander gegenüberliegenden Rändern eines rechteckigen Loches (20) Laschen (26) nach unten oder nach oben gebogen sind.

5. Unterlegscheibe nach einem der Ansprüche 1 bis 4, dadurch gekennzeichnet, daß beidseitig der Öffnung (5) in der Unterlegscheibe (1) zur Aufnahme eines Befestigers (6) jeweils wenigstens je ein Abstandhalter (17) ausgebildet oder angeordnet ist.

6. Unterlegscheibe nach Anspruch 5, dadurch gekennzeichnet, daß die Öffnung (5) und die wenigstens zwei Abstandhalter (17) auf der gemeinsamen Längsmittelachse (22) der Unterlegscheibe (1) liegen.

7. Unterlegscheibe nach Anspruch 6, dadurch gekennzeichnet, daß eine durch die Öffnung (5) und die wenigstens zwei Abstandhalter (17) gelegte Achse (27) gegenüber der Längsmittelachse (22) der Unterlegscheibe (1) um bis zu einem spitzen Winkel (W3) von etwa 10°, vorzugsweise um annähernd 5°, verdreht ist.

8. Unterlegscheibe nach einem der Ansprüche 5 bis 7, dadurch gekennzeichnet, daß der Abstand der beiden Abstandhalter (17) zu beiden Seiten der Öffnung (5) hin verschieden groß ist.

9. Unterlegscheibe nach einem der Ansprüche 1 bis 8, dadurch gekennzeichnet, daß die als Laschen (26) ausgebildeten Abstandhalter (17) im rechten Winkel zur Ebene der Unterlegscheibe (1) ausgerichtet sind.

10. Unterlegscheibe nach einem der Ansprüche 1 bis 8, dadurch gekennzeichnet, daß die als Lasche (26) ausgebildeten Abstandhalter (17) spitzwinklig gegenüber der Ebene der Unterlegscheiben (1) geneigt sind.

11. Unterlegscheibe nach einem der Ansprüche 1 bis 8, dadurch gekennzeichnet, daß die als Lasche (26) ausgebildeten Abstandhalter (17) spitzwinklig gegenüber der Ebene der Unterlegscheiben (1) in die dem in der Unterlegscheibe (1) gebildeten Loch (20) abgewandte Richtung geneigt sind.

12. Unterlegscheibe nach einem der Ansprüche 1 bis 11, dadurch gekennzeichnet, daß die Abstandhalter (17) von am Außenrand der Unterlegscheibe (1) abgebogenen Abschnitten (28) gebildet sind.

13. Unterlegscheibe nach Anspruch 12, dadurch gekennzeichnet, daß die Abstandhalter (17) von an den Außenecken abgebogenen Abschnitten oder Laschen (26) gebildet sind.

14. Unterlegscheibe nach Anspruch 12 oder 13, dadurch gekennzeichnet, daß die am Außenrand der Unterlegscheibe (1) ausgebildeten Abstandhalter (17) spitzwinklig gegen den Innenbereich der Unterlegscheibe (1) gebogen sind.

15. Unterlegscheibe nach einem der Ansprüche 12 bis 14, dadurch gekennzeichnet, daß die am Außenrand der Unterlegscheibe (1) ausgebildeten Abstandhalter (17) zur Gänze umgebogen sind, so daß deren auf der Unterseite oder auf der Oberseite der Unterlegscheibe (1) aufliegende Dicke die Höhe des Abstandhalters (17) bildet.

16. Unterlegscheibe nach einem der Ansprüche 1 bis 15, dadurch gekennzeichnet, daß die Abstandhalter (17) von in Öffnungen (5) an der Unterlegscheibe (1) eingesetzten, z.B. durch Preßsitz oder federnde Rastelemente gehaltenen, getrennt gefertigten Teilen (29) gebildet sind.

## Claims

1. A large-area washer with an opening (5) for the insertion of a fastener (6), which on the surface facing in fastening direction has projecting elements (13) increasing the friction with respect to and/or the grip in a panel and/or course (3) to be fastened, characterised in that on the upper side and/or underside of the washer (1) projecting spacers (17) are provided which are operative when stacking a plurality of washers (1) and which are in the form of tongues (26), webs, protuberances, projections, pins or the like, and in that the height (H) of the spacers (17) from their foot up to the highest projection away from the washer (1) is at least equal to the height (L) of the elements protruding on the underside of the washer (1).

2. A washer according to Claim 1, characterised in that the spacers (17) are formed as tongues (26) punched from the washer (1) and bent downwards or upwards.

3. A washer according to Claim 2, characterised in that the bent-over tongues (26) and the holes (20) formed thereby are respectively of rectangular shape.

4. A washer according to Claim 3, characterised in that tongues (26) are bent downwards or upwards to form spacers (17) on two mutually opposing edges of a rectangular hole (20).

5. A washer according to any one of Claims 1 to 4, characterised in that in each case at least one spacer (17) is formed or provided on either side of the opening (5) in the washer (1) for receiving a fastener (6).

6. A washer according to Claim 5, characterised in that the opening (5) and the at least two spacers (17) lie on the common longitudinal centre axis (22) of the washer (1).

7. A washer according to Claim 6, characterised in that an axis (27) passing through the opening (5) and the at least two spacers (17) is rotated with respect to the longitudinal centre axis (22) of the washer (1) by up to an acute angle (W3) of approximately 10°, preferably approximately 5°.

8. A washer according to any one of Claims 5 to 7, characterised in that the distance apart of the two spacers (17) is of different magnitude on either side of the opening (5).

9. A washer according to any one of Claims 1 to 8, characterised in that the spacers (17) in the form of tongues (26) are aligned at a right angle to the plane of the washer (1).

10. A washer according to any one of Claims 1 to 8, characterised in that the spacers (17) in the form of a tongue (26) are inclined at an acute angle relative to the plane of the washers (1).

11. A washer according to any one of Claims 1 to 8, characterised in that the spacers (17) in the form of a tongue (26) are inclined at an acute angle relative to the plane of the washers (1) in the direction facing away from the hole (20) formed in the washer (1).

12. A washer according to any one of Claims 1 to 11, characterised in that the spacers (17) are formed by portions (28) bent on the outer edge of the washer (1).

13. A washer according to Claim 12, characterised in that the spacers (17) are formed by portions or tongues (26) bent at the outer corners.

14. A washer according to Claim 12 or 13, characterised in that the spacers formed on the outer edge of the washer (1) are bent at an acute angle relative to the inner region of the washer (1).

15. A washer according to any one of Claims 12 to 14, characterised in that the spacers formed on the outer edge of the washer (1) are entirely bent over so that their thickness resting on the underside or on the upper side of the washer (1) defines the height of the spacer (17).

16. A washer according to any one of Claims 1 to 15, characterised in that the spacers (17) are formed by separately produced parts (29) inserted into openings (5) in the washer (1), for example retained by interference fit or by resilient locating elements.

## Revendications

1. Rondelle à grande surface avec un orifice (5) pour mettre en place un élément de fixation (6) qui comporte des éléments (13) en saillie de la surface indiquant la direction de fixation, augmentant le frottement par rapport à une plaque et/ou un panneau (3) et/ou la prise dans une plaque et/ou un panneau à fixer,
caractérisée en ce qu'
en saillie sur la face supérieure et/ou la face inférieure de la rondelle (1) sont prévus des écarteurs (17), efficaces lors de l'empilage de plusieurs rondelles sous forme de languettes, barrettes, parties surélevées, boutons, pointes ou pièces équivalentes, et en ce que la hauteur (H) des écarteurs (17) depuis leur pied jusqu'à leur élévation maximale à partir de la rondelle (1) est au moins égale à la hauteur (L) des éléments (B) en saillie sur la face inférieure de la rondelle (1).

2. Rondelle selon la revendication 1,
caractérisée en ce que
les écarteurs (17) sont réalisés en languettes (26) découpées par matriçage de la rondelle (1) et pliées vers le bas ou vers le haut.

3. Rondelle selon la revendication 2,
caractérisée en ce que
les languettes pliées (26) et les ouvertures (20) formées en conséquence ont une forme rectangulaire.

4. Rondelle selon la revendication 3,
caractérisée en ce que
pour former des écarteurs (17) sur les deux bords opposés l'un à l'autre d'un orifice (20) rectangulaire, des languettes (26) sont repliées vers le bas ou vers le haut.

5. Rondelle selon une des revendications 1 à 4,
caractérisée en ce que
des deux côtés de l'ouverture (5) d'une rondelle (1) pour loger un élément de fixation (6) est réalisé ou placé au moins respectivement un écarteur (17).

6. Rondelle selon la revendication 5,
caractérisée en ce que
l'ouverture (5) et au moins deux écarteurs (17) sont situés sur l'axe médian (22) longitudinal commun de la languette (1).

7. Languette selon la revendication 6,
caractérisée en ce qu'
un axe (27) placé à travers l'ouverture (5) et au moins les deux écarteurs (17) est dévié par rotation par rapport à l'axe moyen longitudinal (22) de la languette (1) d'un angle aigu (W3) allant jusqu'à 10°, de préférence d'environ 5°.

8. Rondelle selon une des revendications 5 à 7,
caractérisée en ce que
la distance des deux écarteurs (17) aux deux côtés de l'ouverture (5) est de grandeur différente.

9. Rondelle selon une des revendications 1 à 8,
caractérisée en ce que
les écarteurs (17) réalisés en languettes (26) sont dirigés à angle droit par rapport au plan de la rondelle (1).

10. Rondelle selon une des revendications 1 à 8,
caractérisée en ce que
les écarteurs (17) réalisés en languettes (26) sont inclinés à angle aigu par rapport au plan des rondelles (1).

11. Rondelle selon une des revendications 1 à 8,
caractérisée en ce que
les écarteurs (17) réalisés en languettes (26) sont inclinés à angle aigu par rapport au plan des rondelles (1) dans la direction s'éloignant de l'ouverture (20) formée dans la rondelle (1).

12. Rondelle selon une des revendication 1 à 11,
caractérisée en ce que
les écarteurs (17) sont formés par des segments (28) repliés sur le bord extérieur de la rondelle (1).

13. Rondelle selon la revendication 12,
caractérisée en ce que
les écarteurs (17) sont formés par des segments ou languettes (26) repliés sur les coins extérieurs.

14. Rondelle selon les revendications 12 ou 13,
caractérisée en ce que
les écarteurs (17) réalisés sur le bord extérieur de la rondelle (1) sont pliés à angle aigu vers la zone intérieure de la languette (1).

15. Rondelle selon une des revendications 12 à 14,
caractérisée en ce que
les écarteurs (17) réalisés sur le bord extérieur de la rondelle (1) sont repliés en totalité, de sorte que leur épaisseur s'appuyant sur la face inférieure ou sur la face supérieure de la rondelle (1) forme la hauteur de l'écarteur (17).

16. Rondelle selon une des revendications 1 à 15,
caractérisée en ce que
les écarteurs (17) sont constitués de pièces (29) fabriquées séparément, mises en place dans des ouvertures (5) de la rondelle (1) ou maintenues par exemple par ajustage serré ou éléments d'arrêt souples.
